# FASCICULE DE BREVET EUROPEEN

(11) **EP 2 326 524 B1**
(45) Date de publication et mention de la délivrance du brevet: **31.12.2014**
(21) Numéro de dépôt: 09784454.2
(22) Date de dépôt: 30.06.2009
(51) Int. Cl.: B60K 11/04, F02B 29/04

(54) **GROUPE REFROIDISSEUR AVEC AGENCEMENT POUR LA FIXATION D'UN PREMIER DISPOSITIF DE REFROIDISSEMENT SUR UN SECOND DISPOSITIF DE REFROIDISSEMENT D'UN MOTEUR A COMBUSTION INTERNE**
KÜHLGRUPPE MIT ANORDNUNG ZUR BEFESTIGUNG EINER ERSTEN KÜHLVORRICHTUNG AN EINER ZWEITEN KÜHLVORRICHTUNG IN EINEM VERBRENNUNGSMOTOR
COOLING GROUP WITH ARRANGEMENT FOR ATTACHING A FIRST COOLING DEVICE ON A SECOND COOLING DEVICE IN AN INTERNAL COMBUSTION ENGINE

(30) Priorité: 23.09.2008 FR 0856376
(43) Date de publication de la demande: 01.06.2011
(73) Titulaire: Renault S.A.S., 92100 Boulogne-Billancourt (FR)
(72) Inventeur: LERONSEUR, Jean-Louis, F-78640 Villiers-Saint-Frederic (FR)
(86) Numéro de dépôt international: PCT/FR2009/051271
(87) Numéro de publication internationale: WO 2010/034912

(56) Documents cités:
- DE-A1- 10 233 859
- DE-A1- 10 315 095
- DE-A1-102006 037 761

## Description

L'invention concerne un groupe refroidisseur pour le refroidissement d'un moteur à combustion interne d'un véhicule automobile, le groupe comportant :
- un premier dispositif pour le refroidissement d'un liquide de refroidissement du moteur, qui comporte :
   -- un premier bloc radiateur globalement parallélépipédique qui est délimité par un premier chant latéral et un second chant latéral parallèles, et un troisième chant perpendiculaire auxdits premier et second chant latéral,
   -- un premier collecteur latéral qui s'étend sur le premier chant latéral du premier bloc radiateur et qui comporte une portion de verrouillage,
   -- un second collecteur latéral qui s'étend sur le second chant latéral du premier bloc radiateur et qui comporte une portion de retenue,
- un second dispositif pour le refroidissement d'air de suralimentation, qui comporte :
   -- un second bloc radiateur globalement parallélépipédique qui est délimité par un premier chant latéral et un second chant latéral parallèles, et un troisième chant perpendiculaire auxdits premier et second chant latéral,
   -- un premier collecteur latéral qui s'étend sur le premier chant latéral du second bloc radiateur et qui comporte une portion de verrouillage,
   -- un second collecteur latéral qui s'étend sur le second chant latéral du second bloc radiateur et qui comporte une portion de retenue, dans lequel la portion de retenue dans lequel la portion de retenue du premier dispositif de refroidissement étant apte à coopérer avec la portion de retenue du second dispositif de refroidissement par coopération de formes, de sorte que le second dispositif occupe une position intermédiaire de retenue sur le premier dispositif, et en ce que la portion de verrouillage du premier dispositif est apte à être verrouillée automatiquement sur la portion de verrouillage du second dispositif par emboîtement élastique, de sorte que le second dispositif occupe une position finale de verrouillage sur le premier dispositif, dans laquelle le troisième chant du premier dispositif est agencé en regard du troisième chant du second dispositif.

On connaît de nombreux agencements pour la fixation d'un premier dispositif de refroidissement sur un second dispositif de refroidissement, lesquels constituent un groupe de refroidissement, ou groupe refroidisseur, pour un moteur à combustion interne d'un véhicule automobile.

De façon générale, le groupe refroidisseur est interposé entre la calandre, et/ou le bouclier, du véhicule et le bloc moteur, de sorte que le groupe refroidisseur est soumis à un flux d'air frais lors de l'avancement du véhicule.

Le premier dispositif de refroidissement est généralement agencé de façon superposée sur le second dispositif de refroidissement.

Le premier dispositif de refroidissement est par exemple destiné à refroidir, par courant d'air, un fluide du moteur à combustion interne, comme un liquide de refroidissement ou l'huile d'un moteur à combustion interne.

Le premier dispositif de refroidissement comporte un premier bloc radiateur qui est interposé entre un premier collecteur d'entrée et un second collecteur de sortie.

Le fluide à refroidir s'écoule depuis le premier collecteur d'entrée jusqu'au second collecteur de sortie du premier dispositif de refroidissement, en circulant à travers le premier bloc radiateur.

De façon connue, le premier bloc radiateur comporte par exemple un faisceau de canalisations, lequel est soumis à un courant d'air pour refroidir le liquide qui le traverse.

A cet effet, le bloc radiateur s'étend dans un plan vertical, orthogonalement à la direction de l'écoulement du flux d'air qui est généré par l'avancement du véhicule ou par un ventilateur.

Le second dispositif de refroidissement est par exemple destiné à refroidir, par courant d'air, l'air de suralimentation qui provient d'un dispositif de suralimentation, comme un turbocompresseur.

Le second dispositif de refroidissement comporte un second bloc radiateur qui est interposé entre un troisième collecteur d'entrée et un quatrième collecteur de sortie.

L'air de suralimentation à refroidir s'écoule depuis le troisième collecteur d'entrée jusqu'au quatrième collecteur de sortie du second dispositif de refroidissement, en circulant à travers le second bloc radiateur, lequel est soumis à un courant d'air pour refroidir l'air qui le traverse.

De même que le premier bloc radiateur du premier dispositif de refroidissement, le second bloc radiateur du second dispositif de refroidissement est par exemple constitué par un faisceau de canalisations.

On connaît un agencement pour la fixation du premier dispositif de refroidissement sur le second dispositif de refroidissement, qui consiste à fixer le premier dispositif sur le second dispositif par des moyens de vissage, lesquels sont agencés sur les collecteurs d'entrée et de sortie respectifs des dispositifs de refroidissement.

Le document DE102006037761 décrit un groupe refroidisseur selon le préambule de la revendication 1.

Une variante consiste à remplacer les vis par des pions ou des goupilles qui sont portés par le premier dispositif et qui coopèrent chacun avec un trou complémentaire du second dispositif de refroidissement.

Un tel agencement de fixation, qu'il soit par vissage, par pion ou par goupille, n'est pas entièrement satisfaisant, puisqu'il nécessite des pièces rapportées, comme des vis, et un outillage spécifique pour le vissage.

Afin de remédier notamment à ces inconvénients, l'invention propose un agencement pour la fixation du premier dispositif de refroidissement sur le second dispositif de refroidissement par coopération de forme.

De plus, l'invention propose de réduire le temps de fixation du premier module sur le second module de refroidissement.

A cet effet, l'invention propose un groupe refroidisseur décrit précédemment, caractérisé en ce que la portion de retenue du premier dispositif comporte une première plaque et un doigt de retenue de la forme d'un T dont une branche d'embase s'étend perpendiculairement depuis ladite première plaque, et une tête de retenue fait saillie perpendiculairement depuis ladite branche d'embase du doigt, et la portion de retenue associée du second dispositif comporte une seconde plaque délimitant une encoche de retenue qui est apte à être engagée autour de la branche d'embase du doigt, de sorte que la seconde plaque du second dispositif est interposée entre la première plaque du premier dispositif et la tête du doigt de retenue, grâce à quoi le second dispositif de refroidissement occupe sa position intermédiaire de retenue sur le premier dispositif de refroidissement.

Selon d'autres caractéristiques de l'invention :
- la portion de retenue du premier dispositif comporte un premier élément déformable élastiquement qui s'étend perpendiculairement depuis la première plaque du premier dispositif, de sorte que la seconde plaque du second dispositif est pincée élastiquement entre ledit premier élément déformable élastiquement et la tête du doigt de retenue, le premier élément élastique constituant ainsi un premier moyen de rattrapage de jeu ;
- la portion de retenue du second dispositif comporte un logement de retenue qui est délimité par la seconde plaque du second dispositif et qui est débouchant, et la tête du doigt de retenue est emboîtée sensiblement sans jeu dans ledit logement de retenue lorsque le second dispositif occupe sa position intermédiaire de retenue, ou sa position finale, sur le premier dispositif ;
- la tête du doigt de retenue comporte un second élément déformable élastiquement qui est en appui sur une paroi interne du logement de retenue, le second élément élastique constituant ainsi un second moyen de rattrapage de jeu ;
- la portion de verrouillage du premier dispositif comporte un logement de verrouillage qui présente une ouverture et qui comporte au moins une première dent interne de verrouillage, et en ce que la portion de verrouillage associée du second dispositif comporte une tête de verrouillage qui est d'une forme complémentaire à celle du logement de verrouillage et qui comporte au moins une seconde dent de verrouillage déformable élastiquement, la tête de verrouillage étant apte à être emboîtée dans le logement de verrouillage, de sorte que la première dent interne du logement coopère avec la première dent de la tête de verrouillage pour s'opposer au retrait du second dispositif, grâce à quoi le second dispositif occupe sa position finale de verrouillage sur le premier dispositif de refroidissement ;
- le logement de verrouillage est débouchant, de sorte que la tête de verrouillage est apte à être emboîtée dans ledit logement de verrouillage jusqu'à la position finale de verrouillage du second dispositif, dans laquelle ladite tête de verrouillage est en appui, perpendiculairement au sens d'emboîtement, contre un seuil du logement ;
- la portion de verrouillage du premier dispositif est réalisée venue de matière avec le premier collecteur associé, et en ce que la portion de retenue du premier dispositif est réalisée venue de matière avec le second collecteur associé, et la portion de verrouillage du second dispositif est réalisée venue de matière avec le second collecteur associé, et en ce que la portion de retenue du second dispositif est réalisée venue de matière avec le second collecteur associé.

D'autres caractéristiques et avantages de l'invention, ainsi que des détails de conception et de réalisation apparaîtront à la lecture de la description détaillée qui va suivre pour la compréhension de laquelle on se reportera aux dessins annexés dans lesquels :
- la figure 1 est une vue schématique en perspective, illustrant un dispositif inférieur de refroidissement dans une position finale de verrouillage sur un premier dispositif supérieur de refroidissement selon l'invention ;
- la figure 2 est une vue de détail en perspective, illustrant une première portion droite de retenue d'un premier collecteur droit du dispositif supérieur et une seconde portion droite de retenue d'un second collecteur droit du dispositif inférieur de la figure 1 ;
- la figure 3 est une vue de détail en perspective, illustrant la première portion droite de retenue et la seconde portion droite de retenue de la figure 2 dans une position de retenue du dispositif inférieur sur le dispositif supérieur ;
- la figure 4 est une vue en section longitudinale, illustrant la première portion droite de retenue et la seconde portion droite de retenue de la figure 2 dans une position de retenue du dispositif inférieur sur le dispositif supérieur ;
- la figure 5 est une vue en section transversale selon la ligne 5-5 de la figure 4, illustrant une tête de retenue de la première portion droite de retenue emboîtée dans une logement complémentaire de la seconde portion droite de retenue ;
- la figure 6 est une vue de détail en perspective, illustrant une première portion gauche de verrouillage du premier dispositif supérieur et une seconde portion gauche de verrouillage du second dispositif inférieur ;
- la figure 7 est une vue en section transversale, illustrant la première portion gauche de verrouillage de la figure 6 emboîtée dans la seconde portion gauche de verrouillage, dans une position finale de verrouillage du dispositif inférieur ;
- la figure 8 est une vue en section longitudinale, illustrant la première portion gauche de verrouillage de la figure 6 emboîtée dans la seconde portion gauche de verrouillage, dans une position finale de verrouillage du dispositif inférieur.

Dans la description qui va suivre, des composants ou éléments identiques, similaires ou analogues seront désignés par les mêmes chiffres de référence.

On adoptera la terminologie vertical, horizontal, supérieur, inférieur, sans référence à la gravité terrestre et la terminologie longitudinal, vertical et transversal en référence aux trièdre L, V, T indiqué sur les figures.

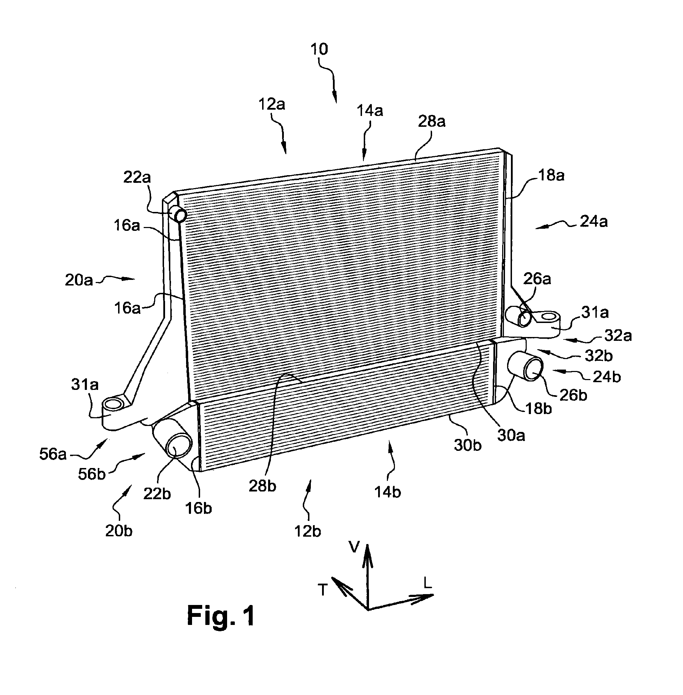

De même, on adoptera la terminologie gauche et droite en référence à la partie gauche et à la partie droite respectivement de la figure 1.

On a représenté à la figure 1 un groupe refroidisseur 10 pour le refroidissement d'un moteur à combustion interne (non représenté) d'un véhicule automobile.

Le groupe refroidisseur 10 comporte un premier dispositif supérieur 12a pour le refroidissement d'un liquide de refroidissement du moteur et un second dispositif inférieur 12b pour le refroidissement d'un air de suralimentation, par exemple l'air de suralimentation provenant d'un turbocompresseur (non représenté).

Dans la suite de la description, des composants ou éléments se rapportant au dispositif supérieur 12a seront désignés par un chiffre de référence suivi de la lettre « a », afin de faciliter la compréhension de la description.

De même, des composants ou éléments se rapportant au dispositif inférieur 12b seront désignés par un chiffre de référence suivi de la lettre « b ».

Le dispositif supérieur 12a de refroidissement comporte un premier bloc radiateur 14a qui est d'une forme parallélépipédique et qui est délimité longitudinalement de gauche à droite par un premier chant gauche 16a vertical et un second chant droit 18a vertical.

Le dispositif supérieur 12a comporte un premier collecteur gauche 20a, ou boîte à eau, qui est fixé sur le premier chant gauche 16a du bloc radiateur 14a, et qui s'étend verticalement de haut en bas.

Le premier collecteur gauche 20a est ici un collecteur d'entrée qui est alimenté en liquide à refroidir, par exemple un liquide de refroidissement du moteur, par l'intermédiaire d'un premier orifice d'alimentation 22a.

De même, le dispositif supérieur 12a comporte un second collecteur droit 24a qui est fixé sur le second chant droit 18a du premier bloc radiateur 14a, et qui s'étend verticalement de haut en bas.

Le second collecteur droit 24a est ici un collecteur de sortie qui comporte un premier orifice de sortie 26a du liquide, de sorte que le liquide s'écoule depuis le premier collecteur gauche 20a d'entrée, jusqu'au second collecteur droit 24a de sortie, en circulant à travers le premier bloc radiateur 14a puis en s'échappant par le premier orifice de sortie 26a.

De plus, le dispositif supérieur 12a de refroidissement est délimité du haut vers le bas, par un premier chant supérieur 28a et un second chant inférieur 30a, dont chacun s'étend horizontalement et longitudinalement de la gauche vers la droite.

Enfin, le collecteur gauche 20a et le collecteur droit 24a du premier dispositif 12a comportent chacun une patte longitudinale 31 a de fixation sur un élément structurel du véhicule.

De même, le second dispositif inférieur 12b de refroidissement comporte un second bloc radiateur 14b qui est d'une forme parallélépipédique et qui est délimité longitudinalement de gauche à droite par un premier chant 16b vertical et un second chant droit 18b vertical.

Le dispositif inférieur 12b comporte un premier collecteur gauche 20b qui est fixé sur le premier chant gauche 16b du second bloc radiateur 14b associé, et qui s'étend verticalement de haut en bas.

Le premier collecteur gauche 20b est ici un collecteur d'entrée qui est alimenté en air de suralimentation, provenant par exemple d'un turbocompresseur (non représenté), par l'intermédiaire d'un second orifice d'alimentation 22b.

De même, le dispositif inférieur 12b comporte un second collecteur droit 24b qui est fixé sur le second chant droit 18b du second bloc radiateur 14b, et qui s'étend verticalement de haut en bas.

Le second collecteur droit 24b est ici un collecteur de sortie qui comporte un second orifice de sortie 26b, de sorte que l'air de suralimentation s'écoule depuis le premier collecteur gauche 20b d'entrée, jusqu'au second collecteur droit 24b de sortie, en circulant à travers le second bloc radiateur 14b puis en s'échappant par le second orifice de sortie 26b.

De plus, le dispositif inférieur 12b de refroidissement est délimité du haut vers le bas, par un premier chant supérieur 28b et un second chant inférieur 30b, dont chacun s'étend horizontalement et longitudinalement de la gauche vers la droite.

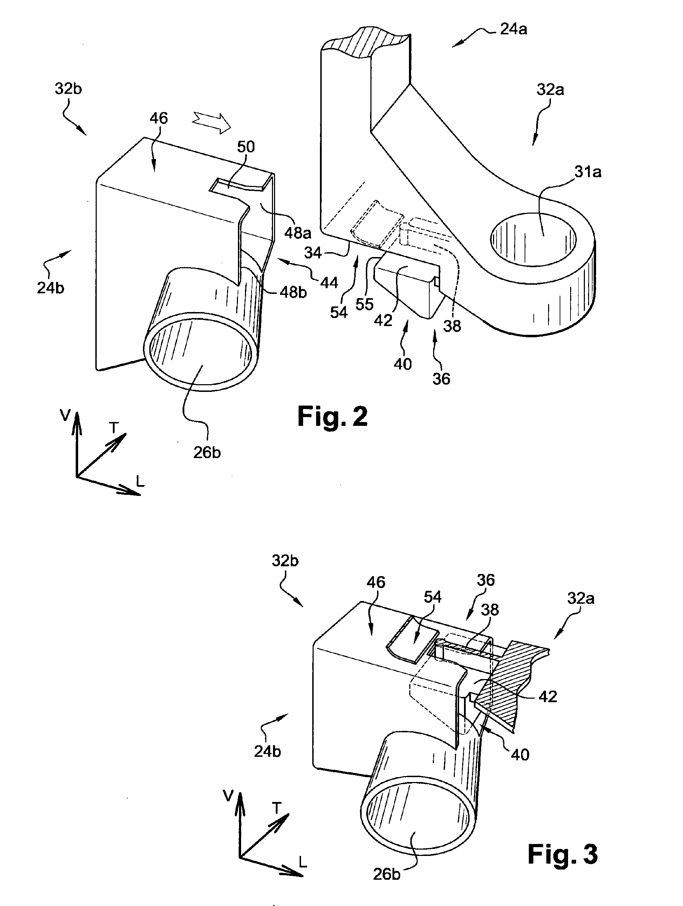

La figure 2 illustre une première portion droite de retenue 32a qui est agencée à une extrémité inférieure du collecteur droit 24a du premier dispositif supérieur 12a.

La première portion droite 32a de retenue et le second collecteur droit 24a sont ici réalisés venue de matière plastique, par exemple par injection.

La première portion droite de retenue 32a comporte une plaque inférieure 34 horizontale depuis laquelle s'étend vers le bas un doigt 36 de retenue.

Le doigt 36 de retenue est de la forme d'un T dont une branche d'embase 38 s'étend verticalement vers le bas depuis la plaque inférieure 34 horizontale, jusqu'à une tête 40 de retenue.

La tête 40 de retenue fait saillie horizontalement depuis la branche d'embase 38 du doigt 36, de sorte que la tête 40 comporte une face supérieure horizontale 42 qui est agencée en vis à vis de la plaque inférieure 34 de la seconde portion droite de retenue 32a.

De façon complémentaire, le second collecteur droit 24b du dispositif inférieur 12b comporte, à une extrémité supérieure, une seconde portion droite 32b de retenue.

La seconde portion droite 32b de retenue et le second collecteur droit 24b sont ici réalisés venue de matière plastique, par exemple par injection.

La seconde portion droite 32b de retenue comporte un logement 44 qui est débouchant vers la droite, qui est délimité vers le haut par une plaque supérieure 46 horizontale et qui est délimité transversalement par une première paroi interne 48a et une seconde paroi interne 48b en vis à vis, dont chacune s'étend verticalement vers le bas depuis la plaque supérieure 46 horizontale.

La plaque supérieure 46 de la seconde portion droite 32b de retenue délimite une encoche 50 de retenue qui s'étend longitudinalement de façon à déboucher dans un bord transversal droit de la plaque supérieure 46.

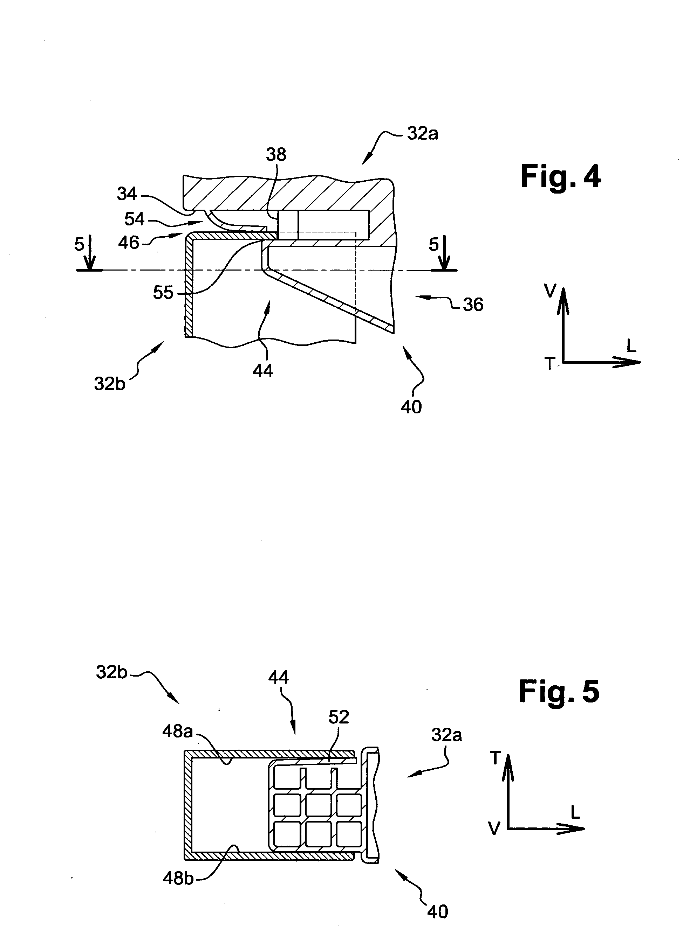

Ainsi, l'encoche 50 est apte à être engagée de la gauche vers la droite autour de la branche d'embase 38 du doigt 36, de sorte que la plaque supérieure 46 de la seconde portion droite 32b de retenue est interposée verticalement entre la plaque inférieure de la première portion 32a de retenue et la tête 40 du doigt 36 de retenue, grâce à quoi le dispositif inférieur 12b de refroidissement occupe une position intermédiaire de retenue, ou de suspension, sur le premier dispositif supérieur 12a de refroidissement, comme on peut le voir aux figures 3 et 4.

Lorsque le dispositif inférieur 12b occupe sa position intermédiaire de retenue, la tête 40 du doigt 36 de retenue coopère avec la première paroi interne 48a et la seconde paroi interne 48b du logement 44, de sorte que la tête 40 est emboîtée sensiblement sans jeu transversal dans le logement 44 de retenue, comme l'illustre la figure 5.

A cet effet, la tête 40 du doigt 36 de retenue comporte une languette latérale 52 verticale qui est déformable élastiquement et qui est appui contre la première paroi interne 48a latérale du logement 44 de retenue, de sorte que la languette latérale 52 constitue un moyen de rattrapage de jeu transversal.

De plus, la première portion droite de retenue 32a comporte une lame ressort 54 déformable élastiquement qui s'étend sensiblement vers le bas depuis la plaque inférieure 34, de sorte que la plaque supérieure 46 de la seconde portion droite de retenue 32b est pincée élastiquement entre la lame ressort 54 et la tête 40 de retenue du doigt 36, la lame ressort 54 constituant ainsi un moyen de rattrapage de jeu vertical.

Dans sa position intermédiaire de retenue, le dispositif inférieur 12b de refroidissement est apte à coulisser longitudinalement par rapport au dispositif supérieur 12a de refroidissement par glissement de la première portion droite de retenue 32a sur la seconde portion droite de retenue 32b.

De plus, dans sa position intermédiaire de retenue, le dispositif inférieur 12b de refroidissement est apte à pivoter sensiblement, autour d'un axe transversal, par rapport au dispositif supérieur 12a de refroidissement, par déformation élastique de la lame de ressort 54 déformable.

L'axe transversal de pivotement du dispositif inférieur 12b est ici matérialisé par un bord supérieur gauche 55 de la tête 40 du doigt 36 de retenue.

Ainsi, la lame de ressort 54 facilite l'engagement de l'encoche 50 de la gauche vers la droite autour de la branche d'embase 38 du doigt 36.

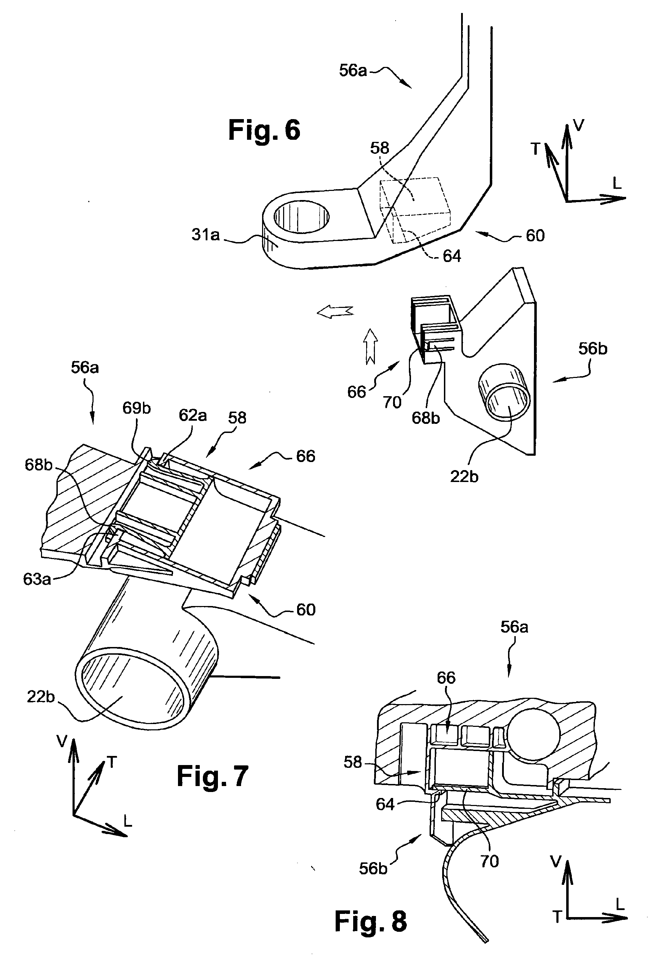

La figure 6 illustre une première portion gauche de verrouillage 56a qui est agencée à une extrémité inférieure du premier collecteur gauche 20a du dispositif supérieur 12a.

La première portion gauche de verrouillage 56a et le premier collecteur gauche 20a sont ici réalisés venue de matière plastique, par exemple par injection.

La première portion gauche de verrouillage 56a délimite un logement de verrouillage 58 qui présente qui est débouchant longitudinalement vers la droite par une ouverture 60 inférieure.

L'ouverture 60 du logement de verrouillage 58 est délimitée inférieurement par un seuil 64 inférieur qui est de le forme d'une plaque horizontale transversale, illustrée à la figure 8.

Comme on peut le voir à la figure 7, le logement de verrouillage 58 comporte une première dent 62a et une seconde dent 63a interne de verrouillage, qui s'étendent verticalement en vis à vis à l'intérieur du logement de verrouillage 58.

De façon complémentaire, le premier collecteur 20b gauche du dispositif inférieur 12b comporte, à une extrémité inférieure, une seconde portion gauche 56b de verrouillage.

La portion gauche 56b de verrouillage et le collecteur gauche 20b du dispositif inférieur 12b sont ici réalisés venue de matière plastique, par exemple par injection.

La portion gauche 56b de verrouillage du dispositif inférieur 12b comporte une tête de verrouillage 66 qui est d'une forme complémentaire à la forme du logement de verrouillage 58 du dispositif supérieur 12a, de sorte que la tête de verrouillage 66 est apte à être insérée longitudinalement de la droite vers la gauche, à travers l'ouverture 60 du logement de verrouillage 58 associé.

La tête de verrouillage 66 comporte une troisième dent 68b et une quatrième dent 69b de verrouillage qui s'étend verticalement et longitudinalement vers la gauche parallèlement et qui sont déformables élastiquement l'une vers l'autre, de sorte que la troisième dent 68b et la quatrième dent 69b de verrouillage sont aptes à être rapprochées transversalement l'une vers l'autre par déformation élastique.

De plus, la tête de verrouillage 66 est délimitée inférieurement par un pallier 70 de la forme d'une plaque horizontale, qui est agencé au-dessous de la troisième dent 68b et de la quatrième dent 69b.

Ainsi, la tête de verrouillage 66 est apte à être emboîtée à travers l'ouverture 60 du logement de verrouillage 58, de sorte que la première dent 62a et la deuxième dent 63a internes du logement de verrouillage 58 coopèrent avec la troisième dent 68b et la quatrième dent 69b de la tête de verrouillage 66 pour s'opposer au retrait du dispositif inférieur 12b vers la droite, grâce à quoi le dispositif inférieur 12b inférieur occupe une position finale de verrouillage sur le dispositif supérieur 12a de refroidissement.

De plus, le pallier 64 de la tête de verrouillage 66 est en appui vers le bas sur le seuil 64 du logement de verrouillage 60, de façon à bloquer la tête de verrouillage 66 en déplacement vers le bas lorsque le dispositif inférieur 12b occupe sa position finale de verrouillage.

Avantageusement, la tête de verrouillage 66 est reçue sensiblement sans jeu, ni transversal ni vertical, dans le logement de verrouillage 58 associé.

Ainsi, un utilisateur est apte à verrouiller le dispositif supérieur 12a et le dispositif inférieur 12b en deux mouvements simples, sans utiliser d'outils complémentaires.

Selon un exemple d'utilisation, l'utilisateur exécute un premier mouvement qui consiste à entraîner le dispositif inférieur 12b de la gauche vers la droite, de sorte que l'encoche 50 est engagée autour de la branche d'embase 38 du doigt 36, jusqu'à ce que le dispositif inférieur 12b occupe sa position intermédiaire de retenue.

Ensuite, l'utilisateur exécute un second mouvement qui consiste à emboîter la tête de verrouillage 66 de la première portion gauche 56b de verrouillage du dispositif inférieur 12b dans le logement de verrouillage 58 de la première portion gauche 56a de verrouillage du dispositif supérieur 12a, jusqu'à ce que le dispositif inférieur 12b occupe sa position finale de verrouillage.

Au cours du second mouvement, le dispositif inférieur 12b de refroidissement coulisse sensiblement longitudinalement vers la gauche par rapport au dispositif supérieur 12a de refroidissement par glissement de la portion droite de retenue 32a du dispositif supérieur 12a sur la portion droite de retenue 32b du dispositif inférieur, de sorte que le dispositif inférieur 12b reste retenu, ou suspendu, sur le dispositif supérieur 12a.

Bien entendu, des inversions mécaniques simples peuvent constituer des variantes de réalisation de l'invention.

De même, les orientations verticales et horizontales sont données à titre d'exemple sans référence à la gravité terrestre.

Il sera compris que l'invention couvre les variantes de réalisation selon lesquelles le dispositif supérieur 12a de refroidissement et le dispositif inférieur 12b de refroidissement sont pivotés de 90° autour d'un axe transversal selon la figure 1, de sorte que lorsque le dispositif inférieur 12b occupe sa position finale de verrouillage, il est par exemple agencé sur un chant latéral du dispositif supérieur 12a de refroidissement.

## Revendications

1. Groupe refroidisseur (10) pour le refroidissement d'un moteur à combustion interne d'un véhicule automobile, le groupe comportant :
- un premier dispositif (12a) pour le refroidissement d'un liquide de refroidissement du moteur, qui comporte :
-- un premier bloc radiateur (14a) globalement parallélépipédique qui est délimité par un premier chant latéral (16a) et un second chant latéral (18a) parallèles, et un troisième chant (30a) perpendiculaire auxdits premier et second chant latéral (16a, 18a),
-- un premier collecteur latéral (20a) qui s'étend sur le premier chant latéral (16a) du premier bloc radiateur (14a) et qui comporte une portion de verrouillage (56a),
-- un second collecteur latéral (24a) qui s'étend sur le second chant latéral (18a) du premier bloc radiateur (14a) et qui comporte une portion de retenue (32a),
- un second dispositif (12b) pour le refroidissement d'air de suralimentation, qui comporte :
-- un second bloc radiateur (14b) globalement parallélépipédique qui est délimité par un premier chant latéral (16b) et un second chant latéral (18b) parallèles, et un troisième chant (28b) perpendiculaire auxdits premier et second chant latéral (16b, 18b),
-- un premier collecteur latéral (20b) qui s'étend sur le premier chant latéral (16b) du second bloc radiateur (14b) et qui comporte une portion de verrouillage (56b),
-- un second collecteur latéral (24b) qui s'étend sur le second chant latéral (18b) du second bloc radiateur (14b) et qui comporte une portion de retenue (32b),
dans lequel la portion de retenue (32a) du premier dispositif (12a) de refroidissement étant apte à coopérer avec la portion de retenue (32b) du second dispositif (12b) de refroidissement par coopération de formes, de sorte que le second dispositif (12b) occupe une position intermédiaire de retenue sur le premier dispositif (12a), et dans lequel la portion de verrouillage (56a) du premier dispositif (12a) étant apte à être verrouillée automatiquement sur la portion de verrouillage (56b) du second dispositif (12b) par emboîtement élastique, de sorte que le second dispositif (12b) occupe une position finale de verrouillage sur le premier dispositif (12a), dans laquelle le troisième chant (30a) du premier dispositif (12a) étant agencé en regard du troisième chant (28b) du second dispositif (12b)
**caractérisé en ce que** la portion de retenue (56a) du premier dispositif (12a) comporte une première plaque (34) et un doigt (36) de retenue de la forme d'un T dont une branche d'embase (38) s'étend perpendiculairement depuis ladite première plaque (34), et une tête (40) de retenue fait saillie perpendiculairement depuis ladite branche d'embase (38) du doigt (36), et **en ce que** la portion de retenue (32b) associée du second dispositif (12b) comporte une seconde plaque (46) délimitant une encoche (50) de retenue qui est apte à être engagée autour de la branche d'embase (38) du doigt (36), de sorte que la seconde plaque (46) du second dispositif (12b) est interposée entre la première plaque (34) du premier dispositif (12a) et la tête (40) du doigt (36) de retenue, grâce à quoi le second dispositif (12b) de refroidissement occupe sa position intermédiaire de retenue sur le premier dispositif (12a) de refroidissement.

2. Groupe refroidisseur selon la revendication 1, **caractérisé en ce que** la portion de retenue (32a) du premier dispositif (12a) comporte un premier élément déformable élastiquement (54) qui s'étend perpendiculairement depuis la première plaque (34) du premier dispositif (12a), de sorte que la seconde plaque (46) du second dispositif (12b) est pincée élastiquement entre ledit premier élément déformable élastiquement (54) et la tête (40) du doigt (36) de retenue, le premier élément élastique (54) constituant ainsi un premier moyen de rattrapage de jeu.

3. Groupe refroidisseur selon la revendication 1, **caractérisé en ce que** la portion de retenue (32b) du second dispositif (12b) comporte un logement de retenue (44) qui est délimité par la seconde plaque (46) du second dispositif (12b) et qui est débouchant, et **en ce que** la tête (40) du doigt (36) de retenue est emboîtée sensiblement sans jeu dans ledit logement de retenue (44) lorsque le second dispositif (12b) occupe sa position intermédiaire de retenue, ou sa position finale, sur le premier dispositif (12a).

4. Groupe refroidisseur selon la revendication 2, **caractérisé en ce que** la tête (40) du doigt (36) de retenue comporte un second élément déformable élastiquement (52) qui est en appui sur une paroi interne (48a) du logement de retenue (44), le second élément élastique (52) constituant ainsi un second moyen de rattrapage de jeu.

5. Groupe refroidisseur selon l'une quelconque des revendications précédentes, **caractérisé en ce que** la portion de verrouillage (56a) du premier dispositif (12a) comporte un logement de verrouillage (58) qui présente une ouverture (60) et qui comporte au moins une première dent interne (62a, 62b) de verrouillage, et **en ce que** la portion de verrouillage (56b) associée du second dispositif (12b) comporte une tête de verrouillage (66) qui est d'une forme complémentaire à celle du logement de verrouillage (58) et qui comporte au moins une seconde dent (68a, 68b) de verrouillage déformable élastiquement, la tête de verrouillage (66) étant apte à être emboîtée dans le logement de verrouillage (58), de sorte que la première dent interne (62a, 62b) du logement (58) coopère avec la première dent (68a, 68b) de la tête de verrouillage (66) pour s'opposer au retrait du second dispositif (12b), grâce à quoi le second dispositif (12b) occupe sa position finale de verrouillage sur le premier dispositif (12a) de refroidissement.

6. Groupe refroidisseur selon la revendication 5, **caractérisé en ce que** le logement de verrouillage (58) est débouchant, de sorte que la tête de verrouillage (66) est apte à être emboîtée dans ledit logement de verrouillage (58) jusqu'à la position finale de verrouillage du second dispositif (12b), dans laquelle ladite tête de verrouillage (66) est en appui, perpendiculairement au sens d'emboîtement, contre un seuil (64) du logement (58).

7. Groupe refroidisseur selon l'une quelconque des revendications précédentes, **caractérisé en ce que** la portion de verrouillage (56a) du premier dispositif (12a) est réalisée venue de matière avec le premier collecteur (20a) associé, et **en ce que** la portion de retenue (32a) du premier dispositif (12a) est réalisée venue de matière avec le second collecteur (24a) associé, et **en ce que** la portion de verrouillage (56b) du second dispositif (12b) est réalisée venue de matière avec le second collecteur (20b) associé, et **en ce que** la portion de retenue (32b) du second dispositif (12b) est réalisée venue de matière avec le second collecteur (24b) associé.

## Patentansprüche

1. Kühlaggregat (10) zum Kühlen eines Verbrennungsmotors eines Kraftfahrzeugs, wobei das Aggregat aufweist:
- eine erste Vorrichtung (12a) zum Kühlen einer Kühlflüssigkeit des Motors, die aufweist:
-- einen ersten global parallelepipedischen Kühlerblock (14a), der von einer ersten Seitenkante (16a) und einer zweiten Seitenkante (18a), die zueinander parallel sind, und von einer dritten Kante (30a) lotrecht zur ersten und zweiten Seitenkante (16a, 18a) begrenzt wird,
-- einen ersten seitlichen Kollektor (20a), der sich auf der ersten Seitenkante (16a) des ersten Kühlerblocks (14a) erstreckt und einen Verriegelungsabschnitt (56a) aufweist,
-- einen zweiten seitlichen Kollektor (24a), der sich auf der zweiten Seitenkante (18a) des ersten Kühlerblocks (14a) erstreckt und einen Halteabschnitt (32a) aufweist,
- eine zweite Vorrichtung (12b) zur Ladeluftkühlung, die aufweist:
-- einen global parallelepipedischen zweiten Kühlerblock (14b), der von einer erstem Seitenkante (16b) und einer zweiten Seitenkante (18b), die zueinander parallel sind, und von einer dritten Kante (28b) lotrecht zur ersten und zweiten Seitenkante (16b, 18b) begrenzt wird,
-- einen ersten seitlichen Kollektor (20b), der sich auf der ersten Seitenkante (16b) des zweiten Kühlerblocks (14b) erstreckt und einen Verriegelungsabschnitt (56b) aufweist,
-- einen zweiten seitlichen Kollektor (24b), der sich auf der zweiten Seitenkante (18b) des zweiten Kühlerblocks (14b) erstreckt und einen Halteabschnitt (32b) aufweist,
wobei der Halteabschnitt (32a) der ersten Kühlvorrichtung (12a) mit dem Halteabschnitt (32b) der zweiten Kühlvorrichtung (12b) durch Formzusammenwirkung derart zusammenwirken kann, dass die zweite Vorrichtung (12b) eine Zwischenhaltestellung auf der ersten Vorrichtung (12a) einnimmt, und wobei der Verriegelungsabschnitt (56a) der ersten Vorrichtung (12a) automatisch durch elastisches Einstecken auf dem Verriegelungsabschnitt (56b) der zweiten Vorrichtung (12b) verriegelt werden kann, so dass die zweite Vorrichtung (12b) eine Endverriegelungsstellung auf der erstem Vorrichtung (12a) einnimmt, in der die dritte Kante (30a) der ersten Vorrichtung (12a) gegenüber der dritten Kante (28b) der zweiten Vorrichtung (12b) angeordnet ist,
**dadurch gekennzeichnet, dass** der Halteabschnitt (32a) der ersten Vorrichtung (12a) eine erste Platte (34) und einen Haltefinger (36) in Form eines T aufweist, von dem ein Grundplattenarm (38) sich lotrecht von der ersten Platte (34) erstreckt, und ein Haltekopf (40) lotrecht von dem Grundplattenarm (38) des Fingers (36) vorsteht, und dass der zugeordnete Halteabschnitt (32b) der zweiten Vorrichtung (12b) eine zweite Platte (46) aufweist, die eine Haltekerbe (50) begrenzt, die um den Grundplattenarm (38) des Fingers (36) herum eingesetzt werden kann, so dass die zweite Platte (46) der zweiten Vorrichtung (12b) zwischen die erste Platte (34) der ersten Vorrichtung (12a) und den Kopf (40) des Haltefingers (36) eingefügt wird, wodurch die zweite Kühlvorrichtung (12b) ihre Zwischenhaltestellung auf der ersten Kühlvorrichtung (12a) einnimmt.

2. Kühlaggregat nach Anspruch 1, **dadurch gekennzeichnet, dass** der Halteabschnitt (32a) der ersten Vorrichtung (12a) ein erstes elastisch verformbares Element (54) aufweist, das sich lotrecht derart von der ersten Platte (34) der ersten Vorrichtung (12a) erstreckt, dass die zweite Platte (46) der zweiten Vorrichtung (12b) elastisch zwischen dem ersten elastisch verformbaren Element (54) und dem Kopf (40) des Haltefingers (36) eingeklemmt wird, wobei das erste elastische Element (54) so eine erste Spielnachstelleinrichtung bildet.

3. Kühlaggregat nach Anspruch 1, **dadurch gekennzeichnet, dass** der Halteabschnitt (32b) der zweiten Vorrichtung (12b) eine Halteaufnahme (44) aufweist, die von der zweiten Platte (46) der zweiten Vorrichtung (12b) begrenzt wird und durchgehend ist, und dass der Kopf (40) des Haltefingers (36) im Wesentlichen ohne Spiel in die Halteaufnahme (44) eingesteckt wird, wenn die zweite Vorrichtung (12b) ihre Zwischenhaltestellung oder ihre Endstellung auf der ersten Vorrichtung (12a) einnimmt.

4. Kühlaggregat nach Anspruch 2, **dadurch gekennzeichnet, dass** der Kopf (40) des Haltefingers (36) ein zweites elastisch verformbares Element (52) aufweist, das auf einer Innenwand (48a) der Halteaufnahme (44) aufliegt, wobei das zweite elastische Element (52) so eine zweite Spielnachstelleinrichtung bildet.

5. Kühlaggregat nach einem der vorhergehenden Ansprüche, **dadurch gekennzeichnet, dass** der Verriegelungsabschnitt (56a) der ersten Vorrichtung (12a) eine Verriegelungsaufnahme (58) aufweist, die eine Öffnung (60) besitzt und mindestens eine erste innere Verriegelungszacke (62a, 62b) aufweist, und dass der zugeordnete Verriegelungsabschnitt (56b) der zweiten Vorrichtung (12b) einen Verriegelungskopf (66) aufweist, der eine komplementäre Form zu derjenigen der Verriegelungsaufnahme (58) hat und mindestens eine zweite elastisch verformbare Verriegelungszacke (68a, 68b) aufweist, wobei der Verriegelungskopf (66) so in die Verriegelungsaufnahme (58) eingesteckt werden kann, dass die erste innere Zacke (62a, 62b) der Aufnahme (58) mit der ersten Zacke (68a, 68b) des Verriegelungskopfs (66) zusammenwirkt, um dem Herausziehen der zweiten Vorrichtung (12b) entgegenzuwirken, wodurch die zweite Vorrichtung (12b) ihre Endverriegelungsstellung auf der ersten Kühlvorrichtung (12a) einnimmt.

6. Kühlaggregat nach Anspruch 5, **dadurch gekennzeichnet, dass** die Verriegelungsaufnahme (58) durchgehend ist, so dass der Verriegelungskopf (66) in die Verriegelungsaufnahme (58) bis in die Endverriegelungsstellung der zweiten Vorrichtung (12b) eingesteckt werden kann, in der der Verriegelungskopf (66) lotrecht zur Einsteckrichtung gegen eine Schwelle (64) der Aufnahme (58) in Auflage ist.

7. Kühlaggregat nach einem der vorhergehenden Ansprüche, **dadurch gekennzeichnet, dass** der Verriegelungsabschnitt (56a) der ersten Vorrichtung (12a) aus einem Stück mit dem ersten zugeordneten Kollektor (20a) hergestellt ist, und dass der Halteabschnitt (32a) der ersten Vorrichtung (12a) aus einem Stück mit dem zugeordneten zweiten Kollektor (24a) hergestellt ist, und dass der Verriegelungsabschnitt (56b) der zweiten Vorrichtung (12b) aus einem Stück mit dem zugeordneten zweiten Kollektor (20b) hergestellt ist, und dass der Halteabschnitt (32b) der zweiten Vorrichtung (12b) aus einem Stück mit dem zugeordneten zweiten Kollektor (24b) hergestellt ist.

## Claims

1. Cooling system (10) for cooling an internal combustion engine of an automobile vehicle, the system including:
- a first device (12a) for cooling an engine cooling liquid, which includes:
-- a globally parallelepiped shape first radiator unit (14a) that is delimited by a first lateral edge (16a), a parallel second lateral edge (18a) and a third edge (30a) perpendicular to said first and second lateral edges (16a, 18a),
-- a first lateral manifold (20a) that extends along the first lateral edge (16a) of the first radiator unit (14a) and includes a locking portion (56a),
-- a second lateral manifold (24a) that extends along the second lateral edge (18a) of the first radiator unit (14a) and includes a retaining portion (32a),
- a second device (12b) for cooling supercharging air, which includes:
-- a globally parallelepiped shape second radiator unit (14b) that is delimited by a first lateral edge (16b), a parallel second lateral edge (18b) and a third edge (28b) perpendicular to said first and second lateral edges (16b, 18b),
-- a first lateral manifold (20b) that extends along the first lateral edge (16b) of the second radiator unit (14b) and includes a locking portion (56b),
-- a second lateral manifold (24b) that extends along the second lateral edge (18b) of the second radiator unit (14b) and includes a retaining portion (32b),
wherein the retaining portion (32a) of the first cooling device (12a) is adapted to cooperate with the retaining portion (32b) of the second cooling device (12b) through cooperation of shapes, so that the second device (12b) occupies an intermediate retaining position on the first device (12a), and wherein the locking portion (56a) of the first device (12a) is adapted to be locked automatically onto the locking portion (56b) of the second device (12b) through elastic nesting so that the second device (12b) occupies a final locking position on the first device (12a) in which the third edge (30a) of the first device (12a) faces the third edge (28b) of the second device (12b),
**characterized in that** the retaining portion (32a) of the first device (12a) includes a first plate (34) and a T-shaped retaining finger (36) a base branch (38) of which extends perpendicularly from said first plate (34) and a retaining head (40) projects perpendicularly from said base branch (38) of the finger (36), and the associated retaining portion (32b) of the second device (12b) includes a second plate (46) delimiting a retaining notch (50) adapted to be engaged around the base branch (38) of the finger (36) so that the second plate (46) of the second device (12b) is disposed between the first plate (34) of the first device (12a) and the head (40) of the retaining finger (36), thanks to which the second cooling device (12b) occupies its intermediate retaining position on the first cooling device (12a).

2. Cooling system according to Claim 1, **characterized in that** the retaining portion (32a) of the first device (12a) includes an elastically deformable first element (54) that extends perpendicularly from the first plate (34) of the first device (12a) so that the second plate (46) of the second device (12b) is clamped elastically between said elastically deformable first element (54) and the head (40) of the retaining finger (36), the elastic first member (54) thus constituting first means for taking up play.

3. Cooling system according to Claim 1, **characterized in that** the retaining portion (32b) of the second device (12b) includes an open retaining housing (44) that is delimited by the second plate (46) of the second device (12b), and the head (40) of the retaining finger (36) is nested substantially without play in said retaining housing (44) when the second device (12b) occupies its intermediate retaining position or its final position on the first device (12a).

4. Cooling system according to Claim 2, **characterized in that** the head (40) of the retaining finger (36) includes an elastically deformable second element (52) that bears on an internal wall (48a) of the retaining housing (44), the second elastic element (52) thus constituting second means for taking up play.

5. Cooling system according to any of the preceding claims, **characterized in that** the locking portion (56a) of the first device (12a) includes a locking housing (58) that has an opening (60) and includes at least one internal first locking tooth (62a, 62b), and the associated locking portion (56b) of the second device (12b) includes a locking head (66) that is of complementary shape to the locking housing (58) and includes at least one elastically deformable second locking tooth (68a, 68b), the locking head (66) being adapted to be nested in the locking housing (58) so that the internal first tooth (62a, 62b) of the housing (58) cooperates with the first tooth (68a, 68b) of the locking head (66) to oppose withdrawal of the second device (12b), thanks to which the second device (12b) occupies its final locking position on the first cooling device (12a).

6. Cooling system according to Claim 5, **characterized in that** the locking housing (58) is an open housing so that the locking head (66) is adapted to be nested in said locking housing (58) as far as the final locking position of the second device (12b) in which said locking head (66) bears perpendicularly to the nesting direction against a threshold (64) of the housing (58).

7. Cooling system according to any of the preceding claims, **characterized in that** the locking portion (56a) of the first device (12a) is made in one piece with the associated first manifold (20a), the retaining portion (32a) of the first device (12a) is made in one piece with the associated second manifold (24a), the locking portion (56b) of the second device (12b) is made in one piece with the associated second manifold (20b), and the retaining portion (32b) of the second device (12b) is produced in one piece with the associated second manifold (24b).
